# EUROPEAN PATENT APPLICATION

(11) **EP 4 699 767 A1**
(43) Date of publication of application: **25.02.2026**
(21) Application number: 24195101.1
(22) Date of filing: 19.08.2024
(51) Int. Cl.: B27N 5/02, B27N 3/18, B27N 3/20, B31B 50/59, B31F 1/00, B27N 1/00, B27N 3/04, B29C 33/00, B29C 33/10, B29C 33/72, B29C 43/02, B29C 43/36, B27N 7/00

(54) **PRODUCT FORMING UNIT AND METHOD FOR DRY MANUFACTURING RIGID CELLULOSE PRODUCTS**

(71) Applicant: Yangi AB, 432 48 Varberg (SE)
(72) Inventor: JONSSON, Mikael, 432 40 Varberg (SE)
(74) Representative: Brann AB

(57) **Abstract**

The present invention relates to a method and a product forming unit for dry manufacturing rigid cellulose products (2) having essentially non-flat general shape from a cellulose blank. The product forming unit comprising a moulding tool having a first mould part (15) and a second mould part (16), wherein at least one of the first mould part (15) and the second mould part (16) is displaceable in the axial direction in relation to the other in order to press the cellulose blank therebetween into final shape by applying a forming pressure P in the axial direction of the moulding tool, the product forming unit (11) comprising heating means for heating the cellulose blank (10) to a forming temperature T. The product forming unit further comprises a dust removing arrangement (28), wherein the dust removing arrangement (28) comprises a suction nozzle (29) arranged at the interface between the first mould part (15) and the second mould part (16) and configured to remove dust from the moulding tool in connection with the end of the pressing of the cellulose blank (10) into final shape.

## Description

### Technical field of the Invention

The present invention relates in general to the field of method and apparatus for dry manufacturing of rigid cellulose products having non-flat general shape from cellulose blank. Such cellulose products may be used for packaging, storing, transporting and/or displaying other products such as electronics, tools, jewelry, food, dairy products, cosmetics, etc., and/or may be used as single/multiple use disposable articles. The method and product forming unit are especially defined to secure reliable removal of the rigid cellulose product from the moulding tool. By cellulose products means products that mainly consists of the cellulose part of organic matter.

The present invention relates specifically to a product forming unit and a method for dry manufacturing rigid cellulose products, the product forming unit comprising a moulding tool having a first mould part and a second mould part, wherein at least one of the first mould part and the second mould part is displaceable in the axial direction in relation to the other in order to press the cellulose blank therebetween into final shape by applying a forming pressure P in the axial direction of the moulding tool, the product forming unit comprising heating means for heating the cellulose blank to a forming temperature T.

### Background of the Invention

There are many situations where it is desirable to provide two-dimensional (2D) or three-dimensional (3D) shaped objects made of sustainable materials, such as biomaterials, instead of using plastic/polymer materials. A biomaterial commonly used for packaging and disposable articles is wet moulded pulp based on cellulose fibres. Such wet moulded pulp has the advantage of being considered a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products.

One advantage of using wet-forming techniques is that the moulding tool is usually made of a wire netting/cloth that is filled with a wet cellulose slurry and thereafter the cellulose slurry is dried and obtains the shape of the moulding tool. The final rigid cellulose product is easily removed from the wire netting.

However, a common disadvantage with all wet-forming techniques is the need for large amounts of water during the preparations of the cellulose pulp and the need for drying during the manufacturing/moulding of the cellulose product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure. The dry-forming techniques comprises different steps of generating an air-laid cellulose blank, that is fed into a product forming unit, i.e. thermo-forming press.

The technical field of dry manufacturing rigid cellulose products having essentially non-flat general shape, such as trays, lids, or the like, i.e. wherein the forming/pressing is performed in one step using a moulding tool having a first/female mould part and a second/male mould part configured to cooperate with each other, is well known. However, the sub-technical field of reliably removing the pressed cellulose product from the moulding tool, is still exposed to challenges.

After the pressing of the cellulose blank there is a problem of dust/fibre in the ambient space around the moulding tool. Thus, dust/fibres that provides a bad working environment for the operators and may also have a negative impact on the operation of the moulding tool. Thus, piles of dust/fibres may prevent correct operation of the moulding tool. Thereto, when a lot of dust/fibres float around in the ambient space, the dust/fibre may enter into the moulding tool together with the cellulose blank and may provide miscolouring and/or uneven surfaces of the pressed cellulose product.

The inventor has realized that the problem of large quantities of loose cellulose fibres floating around and accumulating in the ambient space originates from a blow out from the moulding tool. The cellulose blank comprises moisture when entering into the moulding tool, about 10 w-%, and during the thermo-forming in the moulding tool the moisture builds up an over-pressure in the press cavity which is released as a blow out when the moulding tool is opened. Thereto, the cellulose blank that is fed/transported into the moulding tool is more or less fluffy, i.e. having a bulk of short/small separated cellulose fibres that are loosely connected to each other in the shape of a blank, and since the outer edges of the cellulose blank will be uncompressed, the loose cellulose fibres at the edges of the cellulose blank will follow the blow out and contaminate the ambient space.

Thus, there is a need in the art for a reliable, cheap and unharmful dry-forming technique/process for dry manufacturing rigid cellulose products having non-flat general shape, wherein the operators, the pressed cellulose products as well as the moulding tool are protected from dust/fibre pollution.

### Object of the Invention

The present invention aims at obviating the aforementioned and other disadvantages and failings of previously known methods and devices for dry manufacturing rigid cellulose products, and at providing an improved product forming unit and method for dry manufacturing rigid cellulose products having non-flat general shape, wherein reliable removal of pressed cellulose product originating from an air-laid cellulose blank from the moulding tool is secured.

A primary object of the present invention is to provide an improved product forming unit and method for dry forming/manufacturing rigid cellulose products having non-flat general shape, wherein the environmental benefits as well as time and energy saving benefits of conventional dry-forming techniques are maintained. It is another object of the present invention to provide an improved product forming unit and method for dry forming/manufacturing rigid cellulose products having non-flat general shape, wherein the operator is protected from air pollution originating from loose fibres floating around in the ambient space. It is another object of the present invention to provide an improved product forming unit and method for dry forming/manufacturing rigid cellulose products having non-flat general shape, wherein the moulding tool is protected from damage due to accumulation of loose cellulose fibres.

### Summary of the Invention

According to the invention at least the primary object is attained by means of the initially defined product forming unit and method having the features defined in the independent claims. Preferred embodiments of the present invention are further defined in the dependent claims.

According to a first aspect of the present invention, there is provided a product forming unit of the initially defined type, wherein the product forming unit further comprises a dust removing arrangement, wherein the dust removing arrangement comprises a suction nozzle arranged at the interface between the first mould part and the second mould part and configured to remove dust from the moulding tool in connection with the end of the pressing of the cellulose blank into final shape.

According to a second aspect of the present invention, there is provided a method for dry manufacturing rigid cellulose products having essentially non-flat general shape from a cellulose blank using a product forming unit as defined herein above, wherein the method comprises the steps of:
- providing the cellulose blank into the moulding tool between the first mould part and the second mould part,
- displacing at least one of the first mould part and the second mould part in the axial direction in relation to each other, towards each other,
- pressing the heated cellulose blank between the first mould part and the second mould part,
- displacing at least one of the first mould part and the second mould part in the axial direction in relation to each other, away from each other,
- removing cellulose fibre dust from the moulding tool by means of the suction nozzle in connection with the end of the pressing of the cellulose blank into final shape, and
- removing the cellulose product from the moulding tool.

Thus, the present invention is based on the insight that it is of uttermost importance to prevent the dust/fibres to uncontrollably follow the blow out from the moulding tool in connection with the end of the pressing of the cellulose blank into a rigid cellulose product. Thus, the inventor has realized that having a dust removing device that is active at least when the moulding tool starts to open, i.e. in connection with the end of the pressing of the cellulose blank, will capture most of the loose cellulose fibres since that is the moment when the blow out from the moulding tool is maximal.

The present invention provides the advantage that the cellulose fibres that has not become connected to the pressed cellulose product, and that follows the blow out upon opening of the moulding tool will be prevented from polluting the ambient space. The present invention also provides the advantage that some of the cellulose fibres that mange to cling on to the edges/surfaces of the pressed cellulose product during the blow out upon opening of the moulding tool, may also be removed by the dust removing arrangement. The latter cellulose fibres may otherwise tend to release from the cellulose product in the process downstream the moulding tool.

According to various example embodiments of the present invention, the first mould part comprises a product press-surface and wherein the second mould part comprises a product press-surface, said product press-surface of the first mould part being arranged opposite the product press-surface of the second mould part and together defining a press cavity of the moulding tool, the suction nozzle being located radially outside the press cavity of the moulding tool.

According to various example embodiments of the present invention the moulding tool comprises a sealing element arranged between the first mould part and the second mould part and configured to prevent fluid communication between the press cavity and the ambient space in connection with the end of the pressing of the cellulose blank into final shape. Thereby, a suction nozzle having less extension may be used since the blow out from the moulding tool is prevented by the sealing element and the dust removing arrangement will manage to remove the dust/fibres also from for instance only one side of the press cavity.

According to various example embodiments of the present invention the suction nozzle of the dust removing arrangement at least partly surrounds the press cavity of the moulding tool. Thus, the suction nozzle may be located at one or more sides of the press cavity, preferably on all sides. The longer extension of the suction nozzle the better dust/fibre removal.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic illustration of a moulding tool according to a first embodiment, wherein a cellulose blank is provided into the moulding tool between the first/female mould part and the second/male mould part,
- Fig. 3: is a schematic illustration of the moulding tool according to figure 2 during forming/pressing of the cellulose product,
- Fig. 4: is a schematic illustration of the moulding tool according to figures 2 and 3 after the forming/pressing step and the moulding tool starts to open in connection with the end of the pressing of the cellulose blank into the rigid cellulose product,
- Fig. 5: is a schematic illustration of the moulding tool according to figures 2-4 when the moulding tool is fully open and the cellulose product is removed from the moulding tool,
- Fig. 6: is a schematic illustration of the pressed cellulose product according to figure 5, wherein the scrap area is removed from the final cellulose product, and
- Fig. 7: is a schematic illustration of a moulding tool according to a second embodiment, wherein the moulding tool is fully open and the cellulose product is removed from the moulding tool.

### Detailed description of preferred embodiments of the invention

As used herein, the term "air/dry moulding/forming or air/dry laying/laid" means a well-known method according to which separated cellulose fibres are formed into a cellulose blank/sheet.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

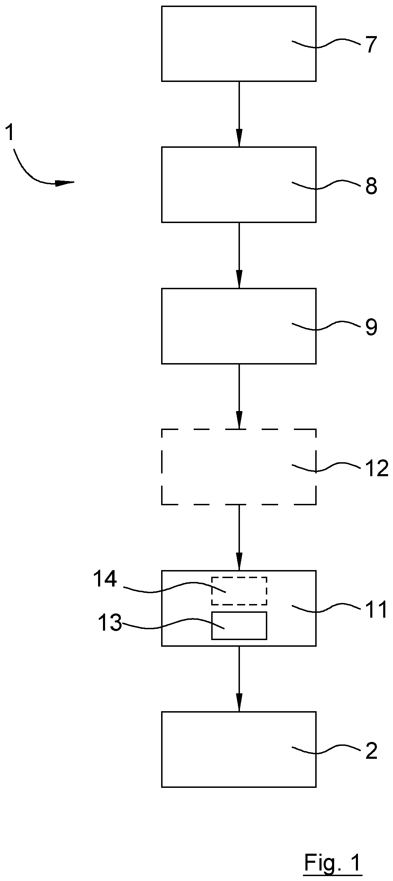

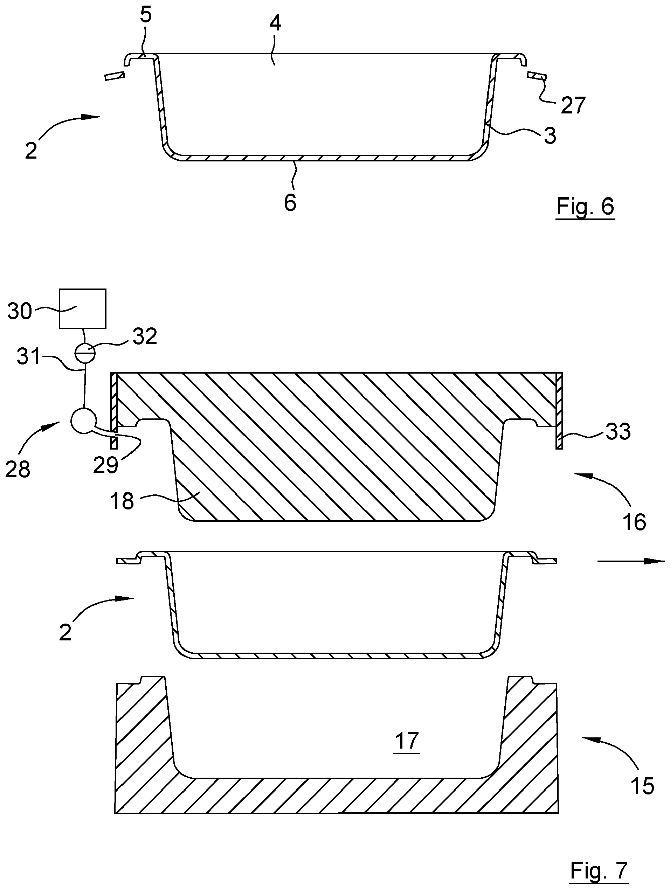

Reference is initially made to figures 1 and 6, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 6 disclose an example of a rigid cellulose product/tray 2. The apparatus 1 may have automatic transfer/handling between the different process steps, and/or may have manual transfer/handling between the different process steps, and thereto the apparatus 1 may have intermediate storing and/or additional process steps between the disclosed process steps, and/or the process steps may be located at different sites.

Figure 6 disclose an example of a rigid cellulose product 2 in the shape of a tray/container, wherein the tray is formed using the inventive method. The tray 2 comprises an inclined circumferential wall 3 and an opening 4 defined by a circumferential rim/brim 5 connected to the upper/free end of the wall 3. According to figure 6 embodiment the brim 5 has an angled shape having an essentially radially extending upper surface and a turned-down outer edge, however it shall be pointed out that the cross-section of the brim 5 may have other shapes. The tray 2 may have truncated cone shape having straight wall 3, narrowing in the direction away from the opening 4, in accordance with figure 6 embodiment. The tray 2 may for instance have curved-shaped wall 3 seen in the axial plane. By having inclined walls 3 multiple trays 2 are stackable one inside the other when they are empty. The tray could also be a mug/cup, a lid, packaging or the like container/product. The cross section of the circumferential wall 3 in the radial plane may have any suitable shape, circular, oval, rectangular, polygonal, etc., and may differ in shape and/or dimension along the axial extension of the tray 2. The tray 2 comprises a bottom 6, wherein the bottom 6 is entirely flat or the bottom may comprise local ribs, projections, etc., for strength and rigidity of the cellulose product. The bottom 6 may be located at the very lower end of the wall 3, according to figure 6 embodiment, and/or be partly located at an axial distance from the lower end of the wall 3, or a combination thereof. The circumferential wall 3 is connected to and extends in the axial direction upwards from the bottom portion 6.

Cellulose raw material 7, i.e. comprising mainly the cellulose part of organic matter, is provided to the production line, and is fed to a separating/disintegrating unit 8 in order to obtain individualized/separated cellulose fibres. The separated cellulose fibres are thereafter transported by an air stream/flow to a dispenser of a cellulose blank/sheet forming unit 9. The cellulose fibres are laid by the dispenser on a moving or stationary perforated surface of the cellulose blank forming unit 9. The cellulose fibre carrying air flow may be generated by suitable device located upstream and/or downstream the perforated surface. Thereafter the generated cellulose blank, generally designated 10, is transported/transferred to a product forming unit 11, whereby rigid cellulose products 2 are formed and discharged from the product forming unit 11.

The cellulose blank forming unit 9 may be configured to generate a continuous cellulose blank/web 10 and/or discontinuous/discrete cellulose blanks 10. Discontinuous/discrete cellulose blanks 10 are fed into the product forming unit 11.

The cellulose raw material 7 may be in the form of reeled pulp or paper, bale of cellulose pulp, paper, etc. and/or sheets of paper, cellulose pulp, etc. In case said cellulose raw material 7 is in the form of sheets and/or reeled pulp or paper, it can be fed directly into the separating unit 8. However, in case said cellulose raw material 7 is in the form of a bale or compact stacks of sheets, etc. one or more shredders and/or one or more additional separating/disintegrating units 8 may be necessary to be used for separating and dosing said cellulose raw material 7 from said bale or sheets in smaller quantities. The shredder(s) prepare cellulose raw material 7 to be accepted by said separating unit 8. The separating unit 8 disintegrates the cellulose raw material 7 into separated cellulose fibres. Said one or plurality of shredder(s) are arranged before said one or a plurality of separating unit(s) 8, so that an output of one of said shredder is connected to an input of one of said separating units 8. The shredders may be arranged in parallel to each other or in series with each other, and the disintegrating units 8 may be arranged in parallel to each other or in series with each other. The shredders and the disintegrating units 8 together constitute a cellulose fibre separating unit, arranged upstream the cellulose blank forming unit 9.

Said cellulose raw material 7 may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 8 may according to various embodiments be constituted by a hammer mill. In said separating unit 8 the cellulose raw material is separated into fibres having a normal length in the range of 0,5-70 mm, preferably less than 10 mm. The length of said fibres may be customized by adjusting the internal properties of the separating unit 8 and/or by choosing a different separating unit 8 and/or choosing different cellulose raw material 7. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 12, located downstream the cellulose blank forming unit 9 and upstream the product forming unit 11. In the pre-compression and/or imprinting unit 12, an air-laid fluffy cellulose blank 10 having a first thickness may be compressed into a cellulose blank 10 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 11 comprises a press unit 13, and may optionally comprise a pre-heating unit 14 arranged upstream the press unit 13. According to various example embodiments said cellulose blank 10 may be heated to an elevated temperature before being fed into the press unit 13 of the product forming unit 11. In such embodiment(s) where the cellulose blank 10 is preheated before being fed into the press unit 13, said press unit 13 may or may not comprise heating. According to various example embodiment said press unit 13 may be a heated press unit 13 for heating said cellulose blank 10 during pressing. In the case of a heated press unit 13, preheating of said cellulose blank 10 using a pre-heating unit 14 is optional. According to various example embodiments preheating of the cellulose blank 10 in said pre-heating unit 14 may be combined with a heated press unit 13. Having a pre-heating unit 14 in combination with a heated press unit 13 will speed up the manufacturing process in the product forming unit 11, and improve the quality/rigidity of the final rigid cellulose product 2. In the product forming unit 11 the cellulose blank 10 is heated to a forming temperature T in the range 120 - 200 °C in order to obtain adequate rigidity and strength in the final cellulose product 2.

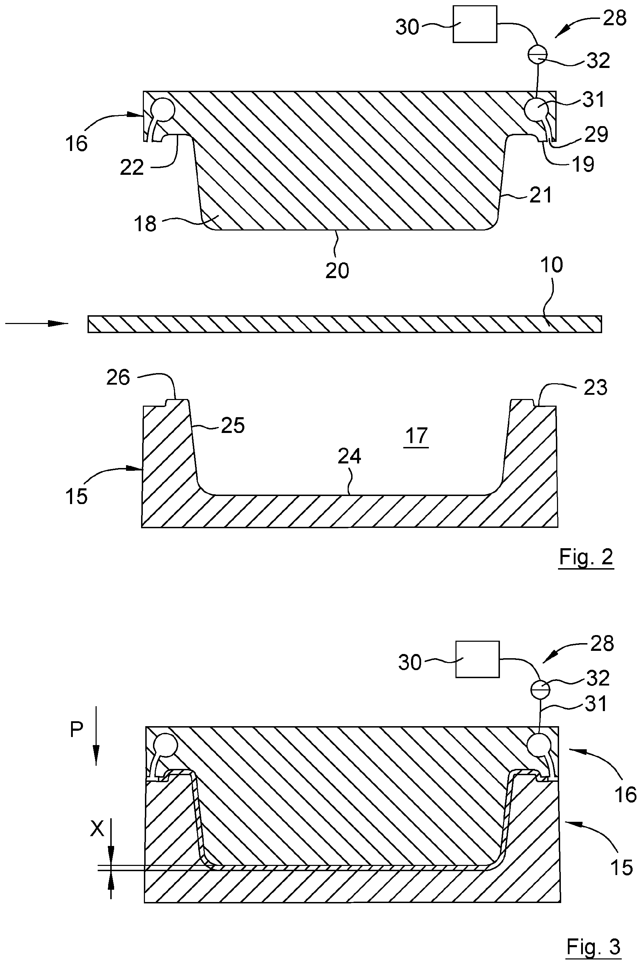

Reference is now made to figures 2-5. The press unit 13 comprises a moulding tool having a first mould part 15 and a second mould part 16 having co-operating designs, wherein at least one of the first mould part 15 and the second mould part 16 is/are displaceable in the axial direction in relation to each other, i.e. reciprocating back and forth in relation to each other, in order to exert pressure to the cellulose blank 10 loaded therebetween. In the figures the mutual displacement is disclosed as being vertical, however the mutual displacement may be horizontal or any other suitable angle. The cellulose blank 10 loaded into the moulding tool, is constituted by the air-laid cellulose blank 10. The air-laid cellulose blank 10 may be generated upstream the product forming unit 11 in the same apparatus/production line and provided/transferred to the product forming unit 11, or may be generated at a separate location and provided/transferred to the product forming unit 11 via intermediate handling and storage.

According to various embodiments the first mould part 15 of the moulding tool is a female mould part, i.e. having a main recess 17 for receiving a major part of the cellulose blank 10, and the second mould part 16 of the moulding tool is a male mould part, i.e. having a main protrusion 18 for cooperation with said recess 17 of the female mould part by being inserted therein, such that the cellulose blank 10 is pressed into a final rigid non-flat shape by applying a predetermined forming pressure P in the axial direction of the moulding tool. According to the disclosed embodiment the male mould part 16 is located above the female mould part 15, but according to alternative embodiments the female mould part may be the second mould part and may be located above the male mould part which is then the first mould part. The pressed cellulose product 2 is intended to remain in/on the first mould part 15 after the pressing of the cellulose product 2, irrespective of the angular orientation of the moulding tool.

The male/second mould part 16 comprises a product press-surface and a scrap press-surface 19 adjacent said product press-surface. In the disclosed example embodiment, the product press-surface of the second mould part 16 comprises a bottom surface 20, a wall surface 21 connected to the bottom surface 20 and extending essentially in the axial direction, and a brim surface 22 connected to the wall surface 21 and extending essentially in the transversal/radial direction. According to various embodiments, the scrap press-surface 19 of the second mould part 16 surrounds the entire product press-surface. According to other embodiments, the scrap press-surface 19 of the second mould part 16 is only located at some locations around the product press-surface. The female/first mould part 15 comprises a product press-surface and a scrap press-surface 23 adjacent said product press-surface. In the disclosed example embodiment, the product press-surface of the first mould part 15 comprises a bottom surface 24, a wall surface 25 connected to the bottom surface 24 and extending essentially in the axial direction, and a brim surface 26 connected to the wall surface 25 and extending essentially in the transversal/radial direction. According to various embodiments, the scrap press-surface 23 of the first mould part 15 surrounds the entire product press-surface. According to other embodiments, the scrap press-surface 23 of the first mould part 15 is only located at some locations around the product press-surface. The scrap press-surface 23 of the first mould part 15 is arranged opposite the scrap press-surface 19 of the second mould part 16.

The cellulose blank 10 is pressed between the surfaces of the male/second mould part 16 and the surfaces of the female/first mould part 15 into final shape. The mutual distance, taken perpendicular to the surface in question, between the product press-surface of the female/first mould part 15 and the product press-surface of the male/second mould part 16 during the pressing of the cellulose blank 10 is X millimetres, wherein X preferably is in the range 0,2-2,5 millimetres, i.e. equal to the thickness of the bottom 6 of the pressed cellulose product 2. Preferably, X is in the range 0,3-1,5 millimetres. The wall surfaces 21, 25 of the moulding tool has to be inclined in order to obtain a release angle for the cellulose product, and in order to obtain adequate press force to the wall region 3 of the cellulose product 2.

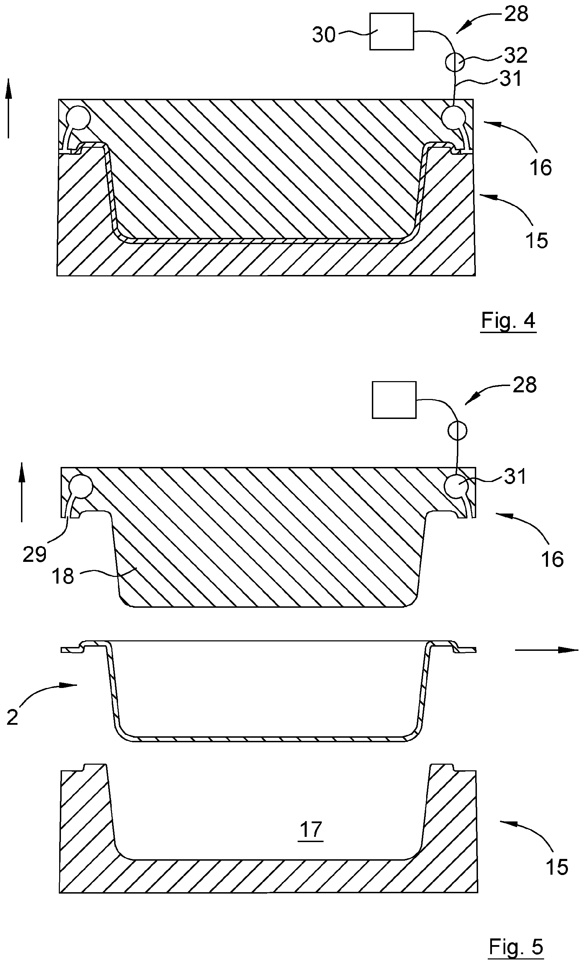

At the scrap area of the moulding tool, the mutual distance between the scrap press-surface of the first mould part 15 and the scrap press-surface of the second mould part 16 is equal to or more than the mutual distance between the product press-surface of the first mould part 15 and the product press-surface pf the second mould part 16. The part of the cellulose blank 10 located at the scrap area may be left entirely uncompressed in the moulding tool, be partially compressed by applying a predetermined partial pressure less than said predetermined forming pressure P, or be fully compressed by applying said predetermined forming pressure P. Thus, radially outside the final rigid cellulose product 2, the cellulose blank 10 comprises a scrap area intended to be cut off. In figure 5 the cellulose product 2 is released and schematically removed from the moulding tool by opening the moulding tool. Figure 6 disclose a schematic illustration of a cellulose tray 2 wherein the scrap 27 is cut off from the cellulose tray 2. According to various embodiments, the scrap 27 may be removed in a separate step in the moulding tool, in a subsequent step outside the moulding tool after the pressing of the cellulose blank 10, or in a step concurrent with the pressing of the cellulose blank 10.

According to various embodiments. When the compartment of the rigid cellulose tray 2 is filled with objects, a film/cover/lid may be attached to the circumferential rim/brim 5 of the cellulose tray 2, for instance using heat lamination. The lid film may be constituted by a multilayer film comprising polymer, metal, and/or paper.

According to various embodiments. Before any items are placed in the compartment of the rigid cellulose tray, the rigid cellulose tray 2 may be provided with a liner film adhered to at least to the circumferential rim/brim 5, and preferably also to the wall 3 and/or the bottom 6 of the cellulose tray 2. The liner film may be constituted by a multilayer film comprising polymer and/or metal. The adhesion of the liner film to the tray is preferably heat activated.

According to various embodiments, the cellulose blank 10 may comprise barrier additives and/or material property enhancing additives, etc., such that the rigid cellulose tray 2 withstand grease, fat, water, vapour, etc. The additives are preferably provided to the cellulose fibers upstream the disintegrating unit 8 or between the disintegrating unit 8 and the product forming unit 11.

The predetermined forming pressure P is in the range 40-10000N/cm², preferably in the range 100-4000N/cm². According to various embodiments said predetermined pressures are above 1000 N/ cm², and according to various embodiments said predetermined pressures are below 2500 N/ cm². The holding time during the pressing step is in equal to or more than 1 second and equal to or less than 10 seconds, preferably less than 5 seconds, and most preferably less than 3 seconds.

Reference is now especially made to figures 2-5 disclosing a first schematic embodiment of the inventive product forming unit 11. The product forming unit 11 comprises a dust removing arrangement, generally designated 28, wherein the dust removing arrangement 28 comprises a suction nozzle 29 arranged at the interface between the first mould part 15 and the second mould part 16 and configured to remove dust from the moulding tool in connection with the end of the pressing of the cellulose blank 10 into final shape.

The dust removing arrangement 28 further comprises a pressure sink 30 connected to the suction nozzle 29 via a conduit 31. The conduit 31 may be partly arranged in the moulding tool.

According to the first schematic embodiment disclosed in figures 2-5, the nozzle 29 is located in the second mould part 16. However, the nozzle 29 may be located in the first mould part 15, or be located in both mould parts. According to various embodiments, the nozzle 29 is located radially outside the first mould part 15 and the second mould part 16 at the interface between the first mould part 15 and the second mould part 16.

According to various embodiments, the pressure sink 30 is constituted by a suction machine, such as a fan, configured to evacuate air from the nozzle 29 via the conduit 31. According to various embodiments, the dust removing arrangement 28 comprises a controllable valve 32 located between the pressure sink 30 and the suction nozzle 29, i.e. somewhere along the conduit 31. The dust removing arrangement 28 is preferably not active during the insertion of the cellulose blank 10 into the moulding tool or during the closing of the moulding tool, i.e. when the first mould part 15 and the second mould part 16 are displaced towards each other and preform the cellulose blank 10 before the pressing of the cellulose blank 10. During this stage there is a lot of cellulose fibres that are loosely connected to the cellulose blank 10 and there is a risk that too large amounts of loose cellulose fibres are removed from the cellulose blank 10 if the dust removing arrangement 28 is active.

The product press-surface of the first mould part 15 is arranged opposite the product press-surface of the second mould part 16 and together defines a press cavity of the moulding tool. The suction nozzle 29 is preferably located radially outside the press cavity of the moulding tool. Thereby, the dust removing arrangement 28 will not risk damaging the pressed cellulose product 2.

According to various embodiments the suction nozzle 29 at least partly surrounds the press cavity of the moulding tool, preferably the suction nozzle 29 completely surrounds the press cavity of the moulding tool.

When the moulding tool comprises scrap press-surfaces, the suction nozzle 29 is preferable located radially outside the scrap press-surface 19 of the first mould part 15 and the scrap press-surface 23 of the second mould part 16.

The dust removing arrangement 28 may be activated during the pressing of the cellulose blank 10, and shall be active in connection with the end of the pressing of the cellulose blank 10. Thereto the dust removing arrangement 28 may be active during the opening of the moulding tool, i.e. when the first mould part 15 and the second mould part 16 are displaced away from each other in order to open the moulding tool.

During the pressing of the cellulose blank 10, the moister is evaporated in the press cavity due to the heat, and the internal pressure in the press cavity increases during the pressing/heating of the cellulose blank 10. In connection with the end of the pressing of the cellulose blank 10, i.e. when the moulding tool starts to open, the internal pressure will be released and blow out all loose cellulose fibres into the ambient space if the dust removing arrangement 28 is not active or present. The internal pressure is released instantly, i.e. during the first millimetre of the opening of the moulding tool.

By having the dust removing arrangement 28 active in connection with the end of the pressing of the cellulose blank 10, and preferably during the pressing of the cellulose blank 10, any loose cellulose fibre will be trapped by the dust removing arrangement 28 and prevented from polluting the ambient space. By having the dust removing arrangement 28 active also during the opening of the moulding tool, any loose cellulose fibres that are still in the moulding tool or in the direct ambient space will be trapped.

Reference is now made to figure 7, disclosing a second schematic embodiment of the present invention, which may be combined with the first schematic embodiment. The moulding tool according to the second embodiment comprises a sealing element 33 arranged between the first mould part 15 and the second mould part 16 and configured to prevent fluid communication between the press cavity and the ambient space in connection with the end of the pressing of the cellulose blank 10 into final shape. Thus, the sealing element 33 prevents the blow out to reach the ambient space during the start of the opening of the moulding tool, and thereby the dust removing arrangement 28 is given more time to remove all the loose cellulose fibres. Thereto, the extension of the suction nozzle 29 may be made smaller and for instance only be located at one side of the press cavity.

The sealing element 33 in the figure 7 embodiment is constituted by a skirt that is connected to the second mould part 16 and that overlap the first mould part 15 and encloses the interface between the first mould part 15 and the second mould part 16 when the moulding tool is in the closed position. The skirt-shaped sealing element 33 preferably abut the first mould part 15. According to alternative embodiments, the sealing element is constituted by an element located between and compressed by the first mould part 15 and the second mould part 16 when the moulding tool is closed. Such compressed sealing element may be constituted by a tube-shaped element that is easily compressed. The skirt/tube may be configured to have less extension in the axial direction on the opposite side of the moulding tool in relation to the dust removing arrangement 28 than the extension in the axial direction of the skirt/tube on the flanks of the moulding tool. Thereby the dust removing arrangement 28 will secure that a cross flow of air passes the press cavity when the moulding tool opens and all loose cellulose fibres in the press cavity are removed.

Thus, according to the inventive method for dry manufacturing rigid cellulose products 2 having essentially non-flat general shape from a cellulose blank 10 using a product forming unit 11 according to the above, the method comprising the steps of:
- providing the cellulose blank 10 into the moulding tool between the first mould part 15 and the second mould part 16,
- displacing at least one of the first mould part 15 and the second mould part 16 in the axial direction in relation to each other, towards each other,
- pressing the heated cellulose blank 10 between the first mould part 15 and the second mould part 16,
- displacing at least one of the first mould part 15 and the second mould part 16 in the axial direction in relation to each other, away from each other,
- removing cellulose fibre dust from the moulding tool by means of the suction nozzle 29 in connection with the end of the pressing of the cellulose blank 10 into final shape, and
- removing the cellulose product 2 from the moulding tool.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

It shall also be pointed out that it shall be considered understood that features from a specific embodiment disclosed herein can be combined with and/or exchanged by features from another embodiment and the combination obvious, even though not expressly taught, when the combination and/or exchange is possible.

## Claims

1. Product forming unit (11) for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a forming pressure P in the axial direction of the moulding tool, the product forming unit (11) comprising heating means for heating the cellulose blank (10) to a forming temperature T, **characterized in that** the product forming unit (11) further comprises a dust removing arrangement (28), wherein the dust removing arrangement (28) comprises a suction nozzle (29) arranged at the interface between the first mould part (15) and the second mould part (16) and configured to remove dust from the moulding tool in connection with the end of the pressing of the cellulose blank (10) into final shape.

2. The product forming unit (11) according to claim 1, wherein the dust removing arrangement (28) comprises a pressure sink (30) connected to the suction nozzle (29) via a conduit (31).

3. The product forming unit (11) according to claim 2, wherein the dust removing arrangement (28) comprises a controllable valve (33) located between the pressure sink (28) and the suction nozzle (29).

4. The product forming unit (11) according to any preceding claim, wherein the first mould part (15) comprises a product press-surface and wherein the second mould part (16) comprises a product press-surface, said product press-surface of the first mould part (15) being arranged opposite the product press-surface of the second mould part (16) and together defining a press cavity of the moulding tool, the suction nozzle (29) being located radially outside the press cavity of the moulding tool.

5. The product forming unit (11) according to claim 4, wherein the moulding tool comprises a sealing element (33) arranged between the first mould part (15) and the second mould part (16) and configured to prevent fluid communication between the press cavity and the ambient space in connection with the end of the pressing of the cellulose blank (2) into final shape.

6. The product forming unit (11) according to claim 4 or 5, wherein the first mould part (15) comprises a scrap press-surface (23) adjacent said product press-surface, and wherein the second mould part (16) comprises a scrap press-surface (19) adjacent said product press-surface, said scrap press-surface (23) of the first mould part (15) being arranged opposite the scrap press-surface (23) of the second mould part (16), the suction nozzle (29) being located radially outside the scrap press-surface (19) of the second mould part (16) and the scrap press-surface (23) of the first mould part (15).

7. The product forming unit (11) according to any of claims 4-6, wherein the suction nozzle (29) of the dust removing arrangement (28) at least partly surrounds the press cavity of the moulding tool.

8. The product forming unit (11) according to any preceding claim, wherein the cellulose blank (10) is composed of an air-laid cellulose blank.

9. Method for controlling a product forming unit (11) configured for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a forming pressure P in the axial direction of the moulding tool, the product forming unit (11) further comprising heating means for heating the cellulose blank (10) to a forming temperature T and a dust removing arrangement (28), wherein the dust removing arrangement (28) comprises a suction nozzle (29) arranged at the interface between the first mould part (15) and the second mould part (16),
the method comprising the steps of:
- providing the cellulose blank (10) into the moulding tool between the first mould part (15) and the second mould part (16),
- displacing at least one of the first mould part (15) and the second mould part (16) in the axial direction in relation to each other, towards each other,
- pressing the heated cellulose blank (10) between the first mould part (15) and the second mould part (16),
- displacing at least one of the first mould part (15) and the second mould part (16) in the axial direction in relation to each other, away from each other,
- removing cellulose fibre dust from the moulding tool by means of the suction nozzle (29) in connection with the end of the pressing of the cellulose blank (10) into final shape, and
- removing the cellulose product (2) from the moulding tool.
